# EUROPEAN PATENT APPLICATION

(11) **EP 1 188 537 A2**
(43) Date of publication of application: **20.03.2002**
(21) Application number: 01121814.6
(22) Date of filing: 11.09.2001
(51) Int. Cl.: B29C 45/28

(54) **A heated head for feeding an injector nozzle for moulding plastics materials**

(30) Priority: 13.09.2000 IT TO000862
(71) Applicant: Thermoplay S.p.A., 11026 Pont Saint Martin (Aosta) (IT)
(72) Inventor: Enrietti, Piero, 11020 Donnas (Aosta) (IT)
(74) Representative: Fioravanti, Corrado

(57) **Abstract**

A heated head (30) for an injector nozzle (50) for moulding plastics materials incorporates a feeding duct (38) for the material to be injected and resistor elements for heading the feeding duct (38). The head (30) also incorporates a pneumatically controlled piston element (34) for operating a valve needle (35) for closing the nozzle (50). The piston element (34) has sealing means (43a) made of a material able to withstand the operating temperatures of the heated head (30).

## Description

The present invention relates to a heated head for feeding a nozzle for moulding plastics materials, of the type defined in the preamble to Claim 1.

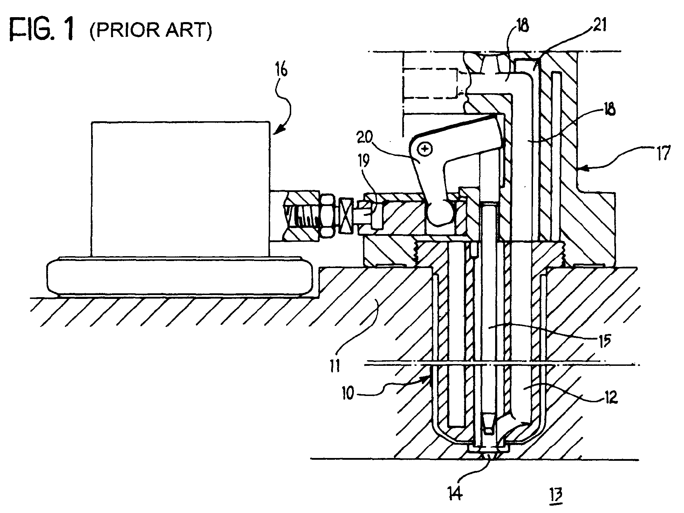

In order better to understand the state of the art and the problems associated with it, a description is first provided of a nozzle assembly with a conventional, pneumatically-controlled needle, such as that shown in Figure 1 of the appended drawings.

With reference to Figure 1, a heated injector head 10 is fitted in a mould 11 for moulding plastics materials. The nozzle 10 has an injector duct 12 for injecting the molten plastics material into a mould cavity 13 through an injector orifice 14. The injector orifice 14 is opened and closed by the lower end of a valve needle 15 controlled for vertical sliding movement by a pneumatic actuating device 16 mounted alongside a heated head 17 in which a feeder duct 18 is formed which is in communication with the injector duct 12 of the nozzle. The actuating device 16 includes a piston rod 19 which can slide horizontally and which is mechanically coupled to the upper end of the pin by means of an L-shaped lever 20. Resistors 21 are incorporated in the head 17 near the feeder duct 18 in order to keep the material to be injected warm and in a fluid state.

One problem with nozzle assemblies of the type described above is the size of the pneumatic actuator device associated with the nozzle. Another limit of this prior art is that the lever transmission system is delicate and also communicates unwanted transverse components to the valve needle.

One object of the present invention is to provide an improved heated feeder head which is able to overcome the aforesaid disadvantages of the prior art and having, in particular, a configuration which makes it possible to manufacture a compact nozzle assembly.

This object is achieved, according to the invention, by providing a heated head having the characteristics claimed in Claim 1.

Other important features of the invention are defined in the dependent claims.

The characteristics and advantages of the invention will become apparent from the detailed description which follows, with reference to the appended drawings, provided purely by way of non-limitative example, and in which:
Figure 1 is a sectioned view of a conventional nozzle assembly with a pneumatically controlled needle;
Figure 2 is a sectioned view of a heated head of the invention with an associated injector nozzle;
Figure 3 is a plan view of the heated head of Figure 2, and
Figure 4 is a sectioned view of the head of Figure 3, taken on the line IV-IV.

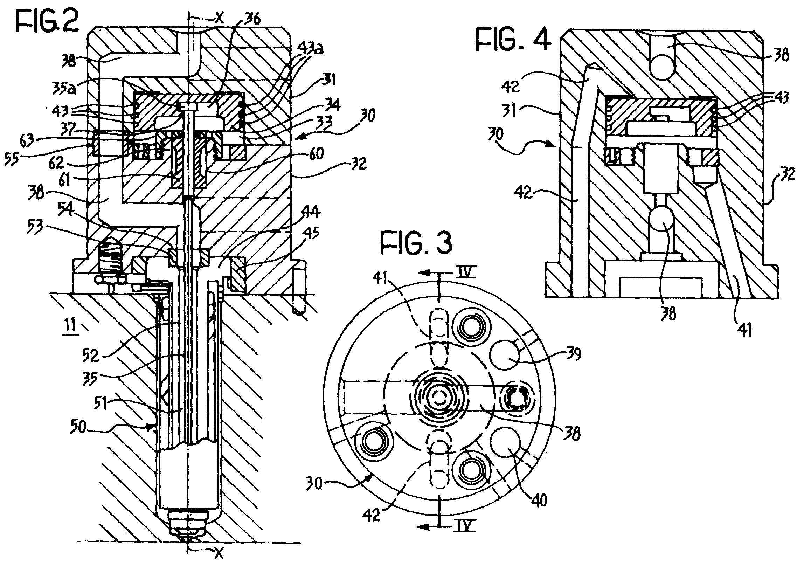

With reference to Figures 2, 3 and 4, a heated head according to the present invention is generally indicated 30 and incorporates a pneumatic device for operating a valve needle 35 of a heated injector nozzle 50.

The heated head 30 is formed by joining two complementary bodies 31, 32 so as to define an internal chamber 33 with a piston element 34 slidably housed therein which is connected to the head 35a of the valve needle 35. The needle 35 is preferably positioned along the central longitudinal axis of the piston element 34.

In the preferred embodiment, a cavity 36 is formed in the lower portion of the piston element 34 which on one side defines an undercut 37 for axially retaining the enlarged head 35a of the needle, thereby securing the needle to the piston when this latter reciprocates inside the chamber 33. At the opposite side to the undercut 37, the cavity 36 constitutes a free space enabling the piston to slide transverse the needle when it is necessary to disconnect these two elements.

As used here, the terms "axial" and "transverse" should be understood as in relation to the longitudinal axis x of the nozzle.

At the top, the lower body 32 forms a seat 60 for a sealing sleeve 61 and a tubular axial formation 62, threaded on the outside for engaging a ring nut 63 shaped like an inverted cup and operable to lock into position the sealing sleeve 61.

A duct 38 for feeding the molten plastics material is also formed inside the heated head 30, along with two seats 39, 40 (see Figure 3) for housing resistor elements of a known type (not shown), and two ducts 41, 42 in communication with the lower and upper portions respectively of the internal chamber 33, for providing air flows which cause the piston 34 and the rod 35 to rise and fall.

Grooves 43 are formed in the outer cylindrical surface of the piston element 34 for housing seal rings 43a (shown in Figure 2, for the sake of simplicity, on the right-hand portion of the piston element 34) made of metal or, in any case able to resist high temperatures. It is advantageous to use piston rings of the type used on the pistons of internal combustion engines.

In the lower portion of the body 32 of the head 30, a cavity 44 is formed with the upper portion of a heated nozzle 50 fitted therein, this nozzle preferably being of a conventional type with a core tube 52 defining an injection duct 51 in which the valve needle 35 slides co-axially and centrally. The manufacturing and operating characteristics of the heated nozzle 50 are not per se relevant to the embodiment of the invention, and will therefore not be discussed here.

It can be appreciated that the heated head of the present invention makes it possible to make the assembly considerably smaller, since the needle actuating device is incorporated inside the head itself. The coaxial position of the needle 35 and of its operating rod makes it possible to act on the needle along its longitudinal axis x, thus eliminating any transverse stress.

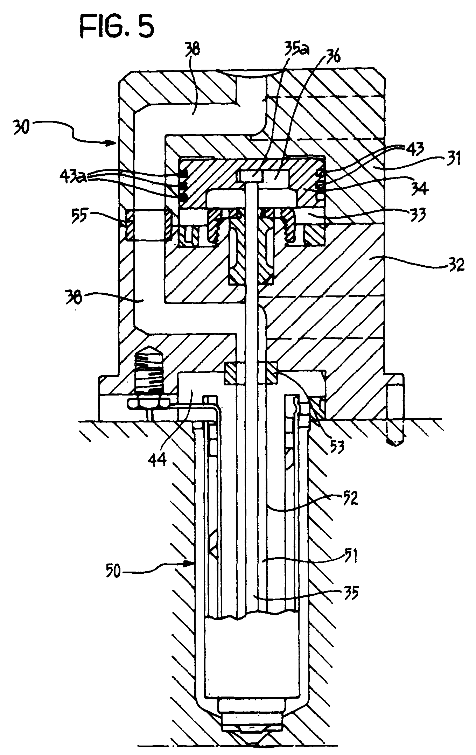

The heated head of the invention can advantageously be coupled to nozzles of different diameters and lengths, provided the injector duct and valve needle are arranged coaxially. Figure 2 shows an example with a nozzle 50 having a restricted diameter, with an annular adapter 45 for it housed in the cavity 44. Figure 5 shows another example, in which a larger-diameter nozzle is fitted without an annular adapter. At the junction area between the outlet aperture of the feeder duct 38 and the tube 52 of the nozzle, a tubular seal element 53 is arranged, which in the preferred embodiment is partially housed in a cavity 54 formed in the lower body 32. A tubular seal element 55, similar to the seal element 54, is inserted through the feeder duct 38 at the interface between the bodies 31 and 32 of the head 30.

## Claims

1. A heated head (30) for an injector nozzle (50) for moulding plastics material, which incorporates a duct (38) for feeding the material to be injected and resistor means for heating this feeder duct (38); **characterised in that** it also incorporates a piston element (34) controlled pneumatically to operate a valve needle (35) for the nozzle (50) and **in that** the piston element (34) has sealing means (43a) made of a material able to withstand the high operating temperatures of the heated head (30).

2. A heated head according to Claim 1, **characterised in that** it includes an inner chamber (33), slidably housing a piston element (34).

3. A heated head according to Claim 2, **characterised in that** the inner chamber (33) is formed by connecting together two complementary bodies (31, 32).

4. A heated head according to Claim 1, **characterised in that** the piston element (34) has axial retaining means (37) for securing the needle (35) axially to the piston element (34).

5. A heated head according to Claim 4, **characterised in that** a cavity (36) is formed in the lower portion of the piston element (34) which on one side forms an undercut (37) for engaging an enlarged portion (35a) of the rod for securing it to the piston.

6. A heated head according to Claim 5, **characterised in that**, on the other side to the undercut (37), the cavity (36) constitutes a free space for allowing the piston element to slide freely transverse the needle when it is necessary to disconnect the needle from the piston element.

7. A heated head according to Claim 1, **characterised in that** the needle (35) is positioned along the central longitudinal axis of the piston element (34).

8. A heated head according to Claim 2, **characterised in that** it includes ducts (41, 42) in communication with the chamber (33) for providing air flows operable to cause the piston element (34) to slide alternately in opposite directions.

9. A heated head according to Claim 1, **characterised in that** a cavity (44) is formed in the lower portion of the head (30) of an appropriate size for housing heated nozzles (50) of different dimensions.

10. A heated head according to Claim 1, **characterised in that** the valve needle (35) is positioned coaxially in the injection duct (51) of the nozzle (50).

11. A heated head according to Claim 1, **characterised in that** the sealing means include at least one annular element (43a) housed in a respective groove (43) formed in a lateral surface of the piston element (34).

12. A heated head according to Claim 1, **characterised in that** the said annular element (43a) is a piston ring of the type used for the pistons of internal combustion engines.
